# EUROPEAN PATENT APPLICATION

(11) **EP 2 123 888 A1**
(43) Date of publication of application: **25.11.2009**
(21) Application number: 08704519.1
(22) Date of filing: 07.02.2008
(51) Int. Cl.: F02D 41/10, F02D 13/02, F02D 23/00, F02D 41/38, F02D 43/00

(54) **CONTROL DEVICE FOR INTERNAL COMBUSTION ENGINE**

(30) Priority: 13.02.2007 JP 2007032175
(71) Applicant: Toyota Jidosha Kabushiki Kaisha, Toyota-shi, Aichi 471-8571 (JP)
(72) Inventor: KOGO, Tomoyuki, Toyota-shi Aichi 471-8571 (JP); TOMODA, Terutoshi, Toyota-shi Aichi 471-8571 (JP); ISHIYAMA, Shinobu, Toyota-shi Aichi 471-8571 (JP); FURUHASHI, Michio, Toyota-shi Aichi 471-8571 (JP); ONO, Tomoyuki, Toyota-shi Aichi 471-8571 (JP); NAKATANI, Koichiro, Toyota-shi Aichi 471-8571 (JP); HISATAKA, Yoshihiro, Toyota-shi Aichi 471-8571 (JP)
(74) Representative: Intes, Didier Gérard André
(86) International application number: PCT/JP2008/052024
(87) International publication number: WO 2008/099750

(57) **Abstract**

The present invention relates to a control apparatus for an internal combustion engine. An object of the present invention is to suppress deterioration of emission and fuel consumption arising during acceleration due to an effect of an exhaust valve opening timing.

An upper limit of a fuel injection quantity is set based on the exhaust valve opening timing. The fuel injection quantity is limited to the upper limit or less when the fuel injection quantity is increased during acceleration. The exhaust valve opening timing at which the upper limit is maximized is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range.

## Description

### Technical Field

The present invention relates to a control apparatus for an internal combustion engine.

### Background Art

A fuel injection control apparatus that sets a maximum value (an upper limit) of a fuel injection quantity in accordance with an intake air amount and engine speed for surely preventing exhaust smoke from being produced during acceleration of a diesel engine is disclosed in JP-A-11-36962.

On the other hand, a variable valve apparatus equipped on an internal combustion engine with a turbocharger, which advances an exhaust valve opening timing when an acceleration state is detected, is disclosed in JP-A-2003-3871. Since the exhaust valve opening timing is advanced during an acceleration operation according to this apparatus, the exhaust energy flowing into an exhaust turbine of the turbocharger increases. Consequently, the rotation speed of the turbocharger can be raised at an early stage and acceleration capability can be improved.

[Patent Document 1] JP-A-11-36962
[Patent Document 2] JP-A-2003-3871
[Patent Document 3] JP-A-2005-139965
[Patent Document 4] JP-A-2004-278431
[Patent Document 5] JP-A-2002-227630

### Disclosure of the Invention

### Problem to be Solved by the Invention

However, when, like the above-mentioned prior apparatus, the exhaust valve opening timing is advanced in an acceleration operation, the exhaust valve is opened before combustion is completely finished so that combustion is interrupted. Consequently, the amount of emission of HC that is an unburned fuel component and the smoke (soot) that is a partially burned component is likely to be increased. Such deterioration of emissions cannot be predicted from the intake air amount. In other words, deterioration of emissions is not necessarily prevented even if the injection quantity is set to the upper limit determined based on the intake air amount and the engine speed when the exhaust valve opening timing is advanced.

The present invention has been made in view of the above circumstances. An object of the present invention is to provide a control apparatus for an internal combustion engine capable of suppressing the deterioration of emission and fuel consumption arising during acceleration due to the effect of the exhaust valve opening timing.

### Means for Solving the Problem

First aspect of the present invention is a control apparatus for an internal combustion engine comprising:
a variable valve mechanism capable of varying at least opening timing of an exhaust valve;
injection quantity upper limit setting means for setting an upper limit of a fuel injection quantity based on the exhaust valve opening timing; and
limitation means for limiting the fuel injection quantity to the upper limit or less.

Second aspect of the present invention is the control apparatus for an internal combustion engine according to the first aspect, wherein the injection quantity upper limit setting means sets the upper limit so that:
the upper limit is maximized when the exhaust valve opening timing is a predetermined timing;
the upper limit gets smaller as the exhaust valve opening timing is advanced from the predetermined timing; and
the upper limit gets smaller as the exhaust valve opening timing is retarded from the predetermined timing.

Third aspect of the present invention is the control apparatus for an internal combustion engine according to the first or the second aspect, wherein
the internal combustion engine is provided with a turbocharger driven by exhaust gas energy; and
the injection quantity upper limit setting means sets the upper limit based on the exhaust valve opening timing and the engine speed.

Fourth aspect of the present invention is the control apparatus for an internal combustion engine according to the third aspect, wherein
the injection quantity upper limit setting means includes a map which defines the upper limit on the basis of the exhaust valve opening timing and the engine speed; and
the map prescribes that the exhaust valve opening timing at which the upper limit is maximized is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range.

Fifth aspect of the present invention is the control apparatus for an internal combustion engine according to the fourth aspect, wherein the map prescribes that the exhaust valve opening timing at which the upper limit is maximized in the low engine speed range is more advanced than the exhaust valve opening timing at which the upper limit is maximized in the high engine speed range.

Sixth aspect of the present invention is the control apparatus for an internal combustion engine according to any one of the third to the fifth aspects, further comprising:
exhaust valve opening timing control means for controlling the actuation of the variable valve mechanism so that the exhaust valve opening timing is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range when the internal combustion engine accelerates.

Seventh aspect of the present invention is the control apparatus for an internal combustion engine according to the sixth aspect, wherein the exhaust valve opening timing control means ensures that the exhaust valve opening timing in the low engine speed range is more advanced than the exhaust valve opening timing in the high engine speed range.

### Advantages of the Invention

According to the first aspect of the present invention, an upper limit of a fuel injection quantity can be set in accordance with an exhaust valve opening timing so as to limit the fuel injection quantity to the upper limit or less as for an internal combustion engine having a variable valve mechanism capable of varying at least an opening timing of an exhaust valve. When the fuel injection quantity is increased during acceleration of the internal combustion engine, the exhaust valve opening timing has great effect on emissions. For example, when the exhaust valve opening timing is advanced, the exhaust valve opens before combustion is completely finished. In such instances, gas that is burning flows into an exhaust port. Consequently, the amount of emission of HC that is an unburned fuel component and the smoke (soot) that is a partially burned component is likely to be increased. On the other hand, when the exhaust valve opening timing is retarded, it becomes hard for burned gas in the cylinder to come out through the exhaust port. Because of this, residual gas increases, whereby emissions are deteriorated. Such deterioration of emissions arising from the effect of the exhaust valve opening timing cannot be predicted from the air amount. According to the first aspect of the present invention, the upper limit of the fuel injection quantity is set in accordance with the exhaust valve opening timing. Therefore, the deterioration of emissions which cannot be predicted from the air amount is prevented surely during acceleration.

According to the second aspect of the present invention, the injection quantity upper limit is set so that the injection quantity upper limit reaches the maximum when the exhaust valve opening timing is a predetermined timing, while decreasing as the exhaust valve opening timing is advanced from the predetermined timing as well as is retarded from the predetermined timing. Consequently, the injection quantity upper limit is set ideally in accordance with the exhaust valve opening timing. Therefore, the deterioration of emissions during an acceleration operation is prevented more surely.

According to the third aspect of the present invention, the injection quantity upper limit can be set based on the exhaust valve opening timing and the engine speed in the internal combustion engine having a turbocharger driven by exhaust gas energy. In the internal combustion engine having the turbocharger, intake air amount varies even if the exhaust valve opening timing is the same since charging efficiency and turbo efficiency changes depending on engine speed. Since the turbo efficiency especially changes a lot, the injection quantity upper limit that is necessary to prevent deterioration of emission and fuel consumption changes in accordance with a change of the engine speed. According to the third aspect of the present invention, the injection quantity upper limit can be set while considering the effect of the changes of charging efficiency and turbo efficiency since the injection quantity upper limit is calculated on the basis of the engine speed as well as the exhaust valve opening timing. Consequently deterioration of emissions and fuel consumption is prevented more surely.

According to the fourth aspect of the present invention, a map which defines the injection quantity upper limit on the basis of the exhaust valve opening timing and the engine speed prescribes that the exhaust valve opening timing at which the upper limit is maximized is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range. When the exhaust valve opening timing is advanced in the low engine speed range, the injection quantity upper limit can be increased without causing deterioration of emissions since turbo efficiency and charging efficiency are improved so as to increase the air amount. When the exhaust valve opening timing is retarded in the mid engine speed range, production of HC and smoke is restrained since the time margin for burning HC and soot more completely in the cylinder is produced. Because of this, the injection quantity upper limit can be increased without causing deterioration of emissions. Also, more expansion work can be obtained so as to raise engine torque. When the exhaust valve opening timing is advanced in the high engine speed range as compared to the mid engine speed range, charging efficiency can be raised since exhaust efficiency rises so as to decrease a residual gas amount. Because of this, the injection quantity upper limit can be increased without causing deterioration of emissions. According to the fourth aspect of the present invention, the balance of acceleration capability, emission and fuel consumption can be optimized since the most suitable injection quantity upper limit can be set due to the above-mentioned matters.

According to the fifth aspect of the present invention, the exhaust valve opening timing at which the injection quantity upper limit is maximized in the low engine speed range is in advance of the exhaust valve opening timing at which the injection quantity upper limit is maximized in the high engine speed range. Therefore, a relationship between the exhaust valve opening timing, the engine speed and the injection quantity upper limit becomes more appropriate, thereby the balance among acceleration capability, emissions and fuel consumption can be further improved.

According to the sixth aspect of the present invention, the actuation of the variable valve mechanism is controlled so that the exhaust valve opening timing is set to a relatively advanced timing in the low engine speed range, moving in the retard direction as the engine speed rises from the low engine speed range toward the mid engine speed range, and moving in the advance direction as the engine speed rises further from the mid engine speed range toward the high engine speed range when the internal combustion engine accelerates. When the exhaust valve opening timing is advanced in the low engine speed range, turbo efficiency and charging efficiency are improved so as to increase the air amount, thereby the injection quantity upper limit can be increased without causing deterioration of emissions. When the exhaust valve opening timing is retarded in the mid engine speed range, the time margin for burning HC and soot more completely in the cylinder is produced, thereby production of HC and smoke is restrained. Because of this, the injection quantity upper limit can be increased without causing deterioration of emissions. Also, engine torque can be raised since more expansion work can be obtained due to the retard of the exhaust valve opening timing. When the exhaust valve opening timing is advanced in the high engine speed range as compared to the mid engine speed range, exhaust efficiency rises so as to decrease the residual gas quantity, thereby charging efficiency can be raised. Because of this, the injection quantity upper limit can be increased without causing deterioration of emissions. From these reasons, the sixth aspect of the present invention can improve acceleration capability in every speed range without inviting deterioration of emissions by controlling the exhaust valve opening timing during the acceleration operation described above.

According to the seventh aspect of the present invention, the exhaust valve opening timing in the low engine speed range is in advance of the exhaust valve opening timing in the high engine speed range during acceleration. Because of this, the relationship between the engine revolution number and the exhaust valve opening timing during acceleration can be improved, thereby the balance among acceleration capability, emissions and fuel consumption can be further improved.

### Brief Description of Drawings

Fig. 1 shows the configuration of a system according to a first embodiment of the present invention.
Fig. 2 is a drawing which shows cross section of a cylinder of a diesel engine in the system shown in Fig. 1.
Fig. 3 is a drawing which shows a map used for setting an upper limit of a fuel injection quantity based on an exhaust valve opening timing.
Fig. 4 is a flowchart illustrating a routine that is executed by the first embodiment of the present invention.
Fig. 5 is a drawing which shows a map used for setting the upper limit of the fuel injection quantity based on the exhaust valve opening timing in a second embodiment of the present invention.
Fig. 6 is a timing chart which shows a change of the exhaust valve opening timing when the diesel engine accelerates from a low engine speed range to a high engine speed range in the second embodiment of the present invention.

### Description of Reference Numerals

- 10: diesel engine
- 12: injector
- 14: common rail
- 18: exhaust path
- 20: exhaust manifold
- 22: exhaust port
- 24: turbocharger
- 26: catalyst
- 28: intake path
- 34: intake manifold
- 35: intake port
- 36: intake air throttle valve
- 38: air flow meter
- 40: external EGR path
- 44: EGR valve
- 48: accelerator position sensor
- 50: ECU
- 52: intake valve
- 54: intake variable valve mechanism
- 56: exhaust valve
- 58: exhaust variable valve mechanism
- 62: crank angle sensor
- 64: piston

### Best Mode for Carrying Out the Invention

Embodiments of the present invention will now be described below with reference to the accompanying drawings. Like elements in the drawings are designated by the same reference numerals and will not be redundantly described.

### First Embodiment

### [Description of System Configuration]

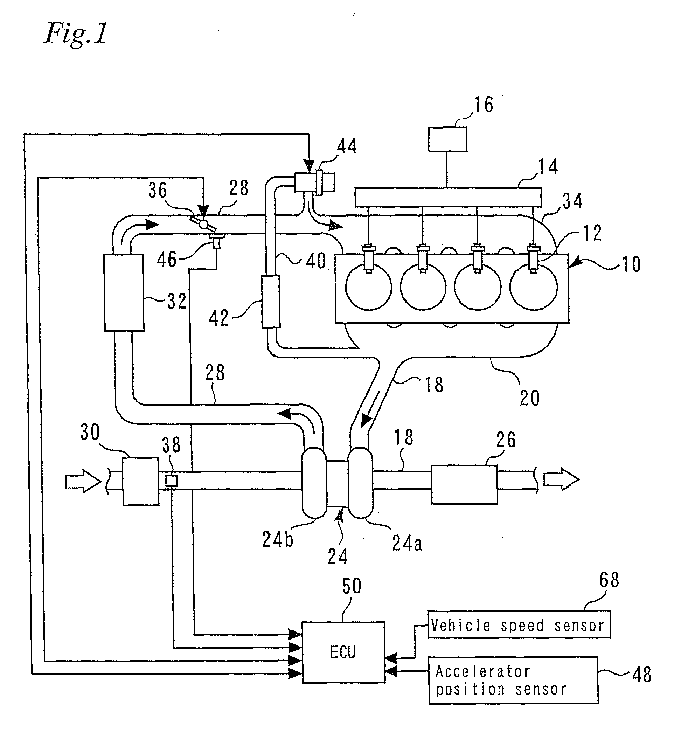

Fig. 1 shows the configuration of a system according to a first embodiment of the present invention. The system shown in Fig. 1 includes a four-stroke-cycle diesel engine 10. The diesel engine 10 is mounted in a vehicle and used as a source of power for the vehicle. The diesel engine 10 according to the present embodiment is in-line four-cylinder type. However, the number of cylinders and the arrangement of the cylinders in the diesel engine of the present invention are not specifically defined.

The following description deals with a case where the present invention is applied to the control of the diesel engine (compression ignition internal combustion engine). However, the present invention is not limited to the control of the diesel engine. In other words the present invention can apply to the control of various internal combustion engines of gasoline engine (jump-spark ignition internal combustion engine) or others.

An injector 12 directly injecting a fuel in the cylinder is installed in each cylinder of the diesel engine 10. The injector 12 of each cylinder is connected to a common rail 14. A hyperbaric fuel pressurized by a supply pump 16 is pooled in the common rail 14. The fuel is supplied to each injector 12 from the common rail 14.

The injector 12 can inject a fuel in the cylinder at an arbitrary timing once or several times per every one cycle. In other words, the injector 12 may be adapted to be able to perform injections such as single or a plurality of pilot injection(s) preceding a main injection and an after injection or a post injection following the main injection per every one cycle other than the main injection.

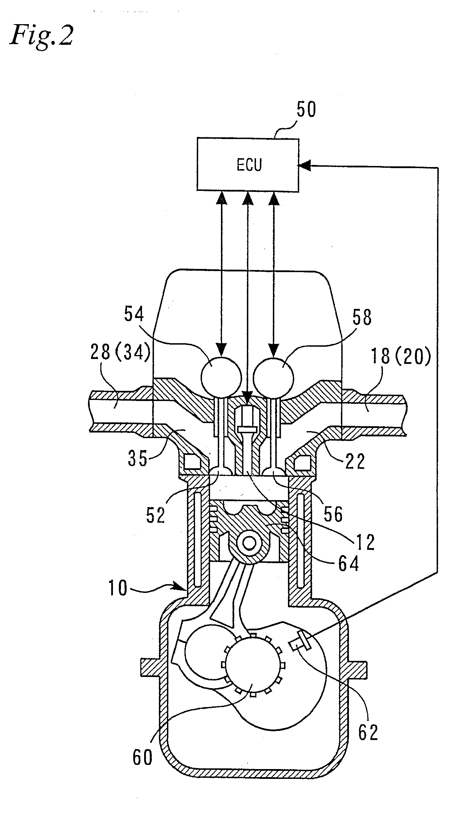

An exhaust path 18 of the diesel engine 10 branches off through an exhaust manifold 20 and is connected to an exhaust port 22 (see Fig. 2) of each cylinder. The diesel engine 10 according to the present embodiment includes a turbocharger 24. The exhaust path 18 is connected to an exhaust turbine 24a of the turbocharger 24.

A catalyst 26 (exhaust emissions purifying device) for purifying exhaust gas is installed in the exhaust path 18 at downstream of the exhaust turbine 24a. For example, one of an oxidation catalyst, an NOx catalyst of storage reduction type or selection reduction type, a DPF (Diesel Particulate Filter) and a DPNR (Diesel Particulate-NOx-Reduction system), or combination thereof can be used for the catalyst 26.

An air cleaner 30 is installed near an inlet of an intake path 28 of the diesel engine 10. Air inhaled through the air cleaner 30 is compressed by an intake air compressor 24b of the turbocharger 24, and is cooled by an intercooler 32. The intake air passing through the intercooler 32 is distributed by an intake manifold 34 so as to flow into each cylinder.

An intake air throttle valve 36 is installed in the intake path 28 between the intercooler 32 and the intake manifold 34. An air flow meter 38 for detecting intake air quantity is installed in the intake path 28 near and downstream of the air cleaner 30.

One end of an external EGR path 40 is connected to the intake path 28 near the intake manifold 34. Another end of external EGR path 40 is connected to the exhaust path 18 near the exhaust manifold 20. This system can perform an external EGR (Exhaust Gas Recirculation), that is, can recirculate a portion of the exhaust gas (combustion gas) to the intake path 28 through the external EGR path 40.

1 A cooler 42 for cooling the external EGR gas is installed in the middle of the external EGR path 40. An EGR valve 44 is installed in the external EGR path 40 at downstream of the EGR cooler 42. Exhaust gas quantity passing through the external EGR path 40, i.e., the external EGR quantity can be controlled by changing the opening of the EGR valve 44.

The external EGR quantity can be also controlled by changing the opening of the intake air throttle valve 36 other that changing the opening of the EGR valve 44 in this system. When the opening of the intake air throttle valve 36 is reduced so as to decrease the intake air, the intake pressure falls, thereby the pressure difference between the intake pressure and the back pressure (exhaust pressure) rises. In other words, differential pressure between before and behind the external EGR path 40 rises. Consequently, the external EGR quantity can be increased.

The system according to the present embodiment further includes an accelerator position sensor 48 for detecting the position of an accelerator pedal of the vehicle having the diesel engine 10, an ECU (Electronic Control Unit) 50 and a vehicle speed sensor 68 for detecting the vehicle speed. Above-mentioned various sensors and actuators are electrically connected to the ECU 50. The ECU 50 controls the operating state of the diesel engine 10 by operating the actuators in accordance with a predetermined program based on the outputs of the sensors.

Fig. 2 is a drawing which shows cross section of the cylinder of the diesel engine 10 in the system shown in Fig. 1. The diesel engine 10 is further explained as follows. As shown in Fig. 2, a crank angle sensor 62 for detecting a rotation angle of a crankshaft 60 of the diesel engine 10 is attached near the crankshaft 60. The crank angle sensor 62 is connected to the ECU 50. According to the crank angle sensor 62, the engine speed can be detected.

The diesel engine 10 also includes an exhaust variable valve mechanism 58 that varies the valve opening characteristic of an exhaust valve 56. The exhaust variable valve mechanism 58 may have any configuration as long as it can vary an opening timing of the exhaust valve 56 linearly or on a step-by-step basis. For example, the ones exemplarily shown below can be employed as the configuration.
(1) A phase variable mechanism that varies a phase of a camshaft for driving the exhaust valve 56. This mechanism varies an opening timing and a closing timing of the exhaust valve 56, while keeping the operating angle constant.
(2) An operating angle variable mechanism for changing the opening timing of the exhaust valve 56 as well as the operating angle by having a swinging cam or the like between the exhaust valve 56 and the camshaft.
(3) A mechanism for making the exhaust valve 56 open or close at arbitrary timing by rotationally driving the cam for opening the exhaust valve 56 by an electric motor.
(4) A mechanism for making the exhaust valve 56 open or close at arbitrary timing by driving it using electromagnetic force (electromagnetic driving valve).

The diesel engine 10 shown in Fig. 2 further includes an intake variable valve mechanism 54 that varies the valve opening characteristic of an intake valve 52. The intake variable valve mechanism 54 and the exhaust variable valve mechanism 58 are connected to ECU 50, respectively. Note that it may be assumed that the valve opening characteristic of the intake valve 52 is fixed in the present invention. In other words, the diesel engine 10 may drive the intake valve 52 by normal valve mechanism rather than the intake variable valve mechanism 54.

### [Features of First Embodiment]

When air fuel ratio in the cylinder of the diesel engine 10 becomes too rich, deterioration of emissions such as increasing of smoke in exhaust gas will be occur. Therefore, emissions are likely to be deteriorated during acceleration accompanied by increasing of fuel injection quantity. An upper limit of fuel injection quantity is set or calculated based on an air amount in the cylinder determined from the signal of the air flow meter 38 or the like so as to limit the fuel injection quantity to the upper limit, normally in the diesel engine 10 in order to prevent such deterioration of emissions.

In the diesel engine 10 according to the present embodiment that has the exhaust variable valve mechanism 58, the opening timing of the exhaust valve 56 (hereinafter, referred to as the "exhaust valve opening timing") is controlled to the optimal timing depending on the engine operation region or also being controlled to perform a recycling treatment of the catalyst 26.

The exhaust valve opening timing influences emissions greatly. For example, when the exhaust valve opening timing is advanced, the exhaust valve 56 may open before combustion is completely finished. In such instances, the amount of emission of HC that is an unburned fuel component and the smoke that is a burning component is likely to increase since the gas in the middle of a combustion process flows into the exhaust port 22. On the other hand, when the exhaust valve opening timing is retarded, emissions may be deteriorated due to increase of residual gas since it becomes difficult for in-cylinder burned gas to flow out to the exhaust port 22. Further, the emissions may be also got worse due to decrease of the turbo efficiency since the exhaust energy supplied to the exhaust turbine 24a decreases.

Such deterioration of emissions cannot be predicted from an intake amount. Therefore, in the diesel engine 10 that is capable of varying the exhaust valve opening timing, deterioration of emissions can not be necessarily prevented only by setting the upper limit of the injection quantity based on the air amount.

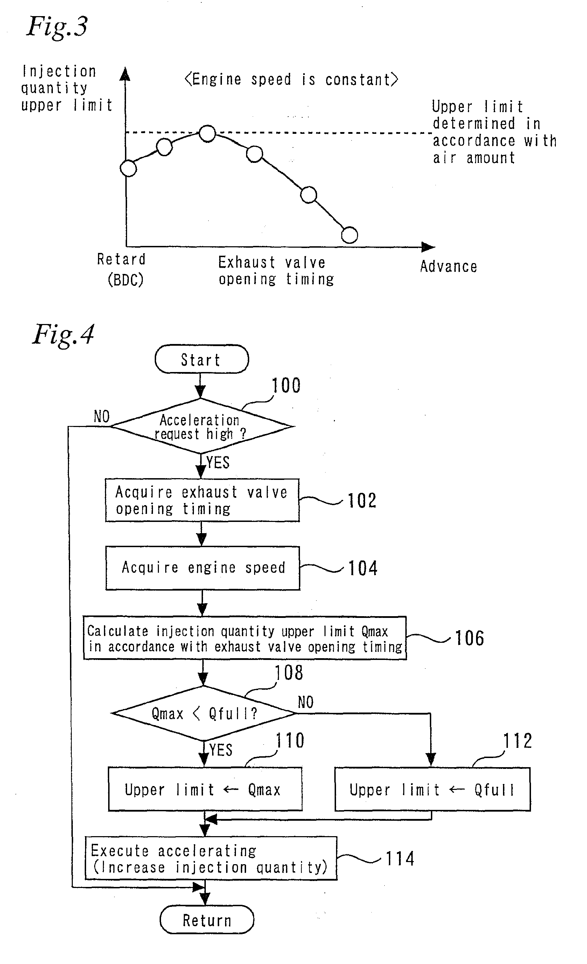

Under the above circumstances, the present embodiment sets the upper limit of the fuel injection quantity based on the exhaust valve opening timing in order to absolutely prevent the deterioration of emissions arising due to the effect depending on the exhaust valve opening timing. Fig.3 is a drawing which shows a map used for setting the upper limit of the fuel injection quantity based on the exhaust valve opening timing.

According to the map shown in Fig. 3, the fuel injection quantity upper limit reaches the maximum when the exhaust valve opening timing is a predetermined timing (a standard timing). Further, according to the map, the fuel injection quantity upper limit is set so that the fuel injection quantity upper limit decreases as the exhaust valve opening timing is advanced from the predetermined timing and decreases as the exhaust valve opening timing is retarded from the predetermined timing. The fuel injection quantity is, therefore, limited to a value smaller than the upper limit determined from an air amount when the exhaust valve opening timing is adjusted to a time point that is more advanced than the standard timing or is adjusted to a time point that is more retarded than the standard timing. Consequently, the deterioration of emissions is prevented surely even if the fuel injection quantity is increased after an acceleration is requested under a situation in which the exhaust valve opening timing is advanced or retarded.

### [Details of Process Performed by First Embodiment]

Fig. 4 is a flowchart showing a routine executed by the ECU 50 in the present embodiment to implement the functionality described above. It is assumed that the routine is repeatedly executed in every predetermined time, or in every cycle while being synchronism with crank angle.

First of all, the routine shown in Fig. 4 performs step 100 to judge whether the degree of the acceleration request is higher than a predetermined value. The degree of the acceleration request can be judged on the basis of an operating amount and an operating rate of the accelerator pedal detected by the accelerator position sensor 48. If the judgment result obtained in step 100 indicates that the degree of the acceleration request is lower than the predetermined value, it is not necessary to perform the following processing because it can be concluded that the fuel injection quantity will not be increased up to the degree which invites deterioration of emissions.. Thus, in this case, the processing of this routine is just finished.

On the other hand, if the judgment result obtained in step 100 indicates that the degree of the acceleration request is higher than the predetermined value, step 102 is performed to acquire the exhaust valve opening timing. The exhaust valve opening timing can be detected by a sensor installed in the exhaust variable valve mechanism 58. Subsequently, step 104 is performed to acquire the engine speed based on the signal of the crank angle sensor 62.

Next, step 106 is performed to calculate the injection quantity upper limit Qₘₐₓ based on the exhaust valve opening timing acquired in step 102 and the engine speed acquired in step 104. ECU 50 stores a map such as shown in Fig. 3 for each of several engine speeds. In step 106, the injection quantity upper limit Qₘₐₓ is calculated by referring to the map.

Subsequently step 108 is performed to judge whether the injection quantity upper limit Qₘₐₓ calculated in step 106 is lower than the injection quantity upper limit Q_{full} that is determined from the air amount in the process of the other routine. If the judgment result obtained in step 108 indicates that Qₘₐₓ is lower than Q_{full}, step 110 is performed to set Qₘₐₓ as the definitive injection quantity upper limit. On the other hand, if the judgment result obtained in step 108 indicates that Qₘₐₓ is higher than or equal to Q_{full}, step 112 is performed to set Q_{full} as the definitive injection quantity upper limit.

After the definitive injection quantity upper limit is set in this way, step 114 is performed to increase the quantity injected from the injector 12 so as to execute acceleration. In this case, the fuel injection quantity (gross amount when multiple injections are performed in one cycle) injected from the injector 12 is limited to the definitive injection quantity upper limit or less.

The processing of the routine shown in Fig. 4 explained above makes it possible to set the upper limit of the fuel injection quantity based on the exhaust valve opening timing. Consequently, the deterioration of emissions which cannot be predicted from the air amount is surely prevented even if the exhaust valve opening timing is advanced or retarded during acceleration of the diesel engine 10.

In the first embodiment, which has been described above, the "injection quantity upper limit setting means" in the first to third aspects of the present invention is implemented when the ECU 50 performs step 106; and the "limitation means" in the first aspect of the present invention is implemented when the ECU 50 performs steps 110 and 114. Further, the turbocharger 24 corresponds to the "turbocharger" in the third aspect of the present invention.

### Second Embodiment

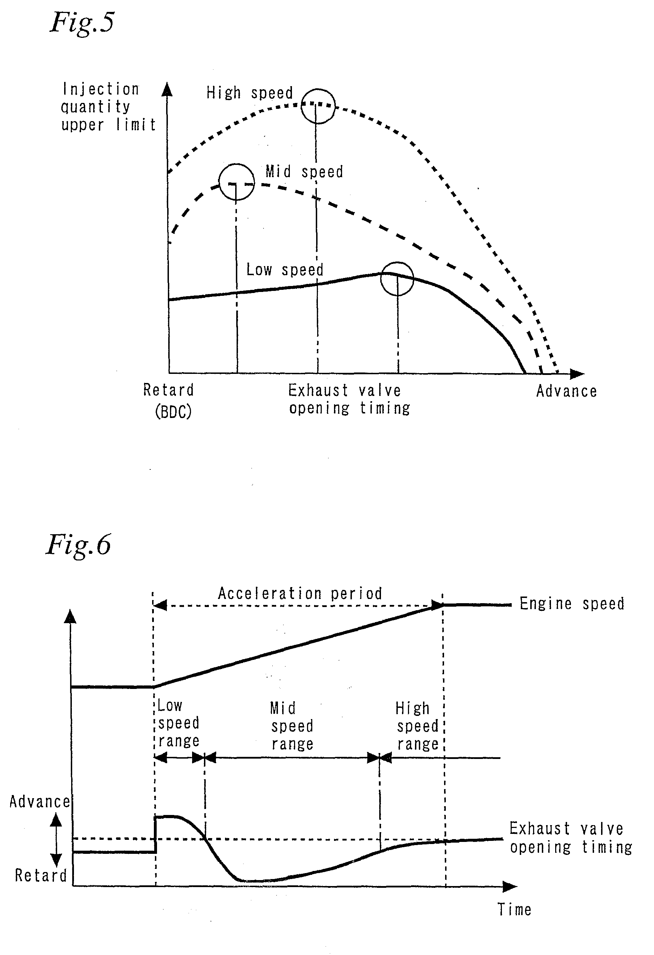

A second embodiment of the present invention will now be described with reference to Figs. 5 and 6. The differences between the second embodiment and the first embodiment described earlier will be mainly described while briefly describing common matters for these two embodiments or skipping the description of such matters.

Fig. 5 is a drawing which shows a map used for setting the upper limit of the fuel injection quantity based on the exhaust valve opening timing in the present embodiment. This map is hereinafter referred to as the "injection quantity upper limit map". The injection quantity upper limit map is prepared for each of several engine speeds. In Fig. 5, the continuous line shows the injection quantity upper limit map representing the low engine speed range. The broken line shows the injection quantity upper limit map representing the mid engine speed range. The dotted line shows the injection quantity upper limit map representing the high engine speed range. In Fig. 5, as the engine speed rises from the low engine speed range to the mid engine speed range, the injection quantity upper limit map changes gradually from a form shown by the continuous line into a form shown by the broken line. As the engine speed further rises from the mid engine speed range to the high engine speed range, the injection quantity upper limit map changes gradually from the form shown by the broken line into a form shown by the dotted line.

As shown in Fig. 5, the injection quantity upper limit map in the present embodiment prescribes that the exhaust valve opening timing at which the injection quantity upper limit is maximized is set to a relatively advanced timing in the low engine speed range, is set to a relatively retarded timing in the mid engine speed range, and is set to the middle timing between the case of the low engine speed range and the case of the mid engine speed range in the high engine speed range.

Fig. 6 is a timing chart which shows a change of the exhaust valve opening timing when the diesel engine 10 accelerates from the low engine speed range to the high engine speed range in the present embodiment.

In the present embodiment, when a high-level acceleration request is given and the diesel engine 10 accelerates (increases the fuel injection quantity), the ECU 50 controls the exhaust variable valve mechanism 58 so that the exhaust valve opening timing changes along a line binding each point at which the injection quantity upper limit is maximized in the injection quantity upper limit map of each engine speed.

In other words, as shown in Fig. 6, when acceleration of the diesel engine 10 is started in the low engine speed range, the exhaust valve opening timing is set to, at first, a timing earlier than usual. Then, the exhaust valve opening timing is retarded as the engine speed rises toward the mid engine speed range. The exhaust valve opening timing is advanced again as the engine speed further rises toward the high engine speed range.
The exhaust valve opening timing in the high engine speed range is more advanced than the timing in the mid engine speed range, and is more retarded than the timing in the low engine speed range.

According to the present embodiment, the following advantages is provided by controlling the exhaust valve opening timing as mentioned above during an acceleration opeartion of the diesel engine 10.

### (In a case of the low engine speed range)

Generally, in the low engine speed range, flow rate of exhaust gas is low and exhaust energy supplied to the exhaust turbine 24b is low. Therefore, it is difficult to increase the air amount since turbo efficiency and charging efficiency are low. Thus, in the low engine speed range just after the beginning of an acceleration process the present embodiment makes the exhaust valve opening timing earlier than usual. Consequently, temperature and pressure of the exhaust gas flowing into the exhaust turbine 24b is raised, thereby the exhaust energy supplied to the exhaust turbine 24b can be increased. As a result, rotation speed of the turbocharger 24 is raised quickly and turbo efficiency and charging efficiency is improved. Therefore the air amount can be increased enough.

As mentioned above, it becomes possible to inject relatively a lot of fuel without causing deterioration of emissions in the low engine speed range by advancing the exhaust valve opening timing since it causes the air amount increase. Thus, as shown in Fig. 5, the injection quantity upper limit map for the low engine speed range prescribes that the injection quantity upper limit is maximized when the exhaust valve opening timing is set to a relatively advanced timing. Consequently, according to the present embodiment, the injection quantity upper limit can be enlarged by setting the exhaust valve opening timing to the relatively advanced timing in the low engine speed range at the time of acceleration. As a result, it becomes possible to enlarge an increasing step of the fuel injection quantity so as to increase the engine torque. Therefore, acceleration capability in the low engine speed range is improved without being accompanied with deterioration of emissions.

### (In a case of the mid engine speed range)

In the mid engine speed range, there is room in terms of time for absolutely exhausting in-cylinder burned gas to the exhaust port 22 in comparison with the high engine speed range. Therefore, even if the exhaust valve opening timing is retarded to some extent, the quantity of residual gas does not increase so much. In other words the drop of charging efficiency is small. Also, in the mid engine speed range, there is enough flow rate of exhaust gas for driving the turbocharger 24. Therefore, even if exhaust energy is decreased by the exhaust valve opening timing being retarded, the drop of turbo efficiency and charging efficiency is small. Thus, in the mid engine speed range at the time of acceleration, the present embodiment retards the exhaust valve opening timing so that it approaches to the end of the expansion stroke (bottom dead center). Consequently, high cylinder pressure can be maintained until near the expansion bottom dead center. Therefore, much expansion work can be collected by piston 64 so as to raise the engine torque.

Also, the time margin for burning HC and soot more completely in the cylinder can be produced when the exhaust valve opening timing is retarded in the mid engine speed range. Therefore, production of HC and smoke is restrained. Because of this, relatively a lot of fuel can be injected without causing deterioration of emissions. Under the above circumstances, as shown in Fig. 5, the injection quantity upper limit map for the mid engine speed range prescribes that the injection quantity upper limit is maximized when the exhaust valve opening timing is set to a relatively retarded timing. Consequently, according to the present embodiment, in the mid engine speed range at the time of acceleration, the injection quantity upper limit can be raised by setting the exhaust valve opening timing to the relatively retarded timing. As a result, an increasing step of the fuel injection quantity can be increased. This raises, coupled with the above-mentioned increased expansion work, the engine torque enough. Therefore, acceleration capability in the mid engine speed range is improved without being accompanied with deterioration of emissions.

### (In a case of the high engine speed range)

When the exhaust valve opening timing is too late in the high engine speed range, the quantity of residual gas is liable to increase and charging efficiency is prone to fall. Thus, in the high engine speed range at the time of acceleration, the present embodiment makes the exhaust valve opening timing being advanced as compared to that in the mid engine speed range. Consequently, exhaust efficiency rises and the quantity of residual gas decreases. In other words, charging efficiency can be raised. Because of this, relatively a lot of fuel can be injected without causing deterioration of emissions. Under the above circumstances, as shown in Fig. 5, the injection quantity upper limit map for the high engine speed range prescribes that the injection quantity upper limit is maximized when the exhaust valve opening timing is advanced as compared to that in the mid engine speed range. Consequently, according to the present embodiment, in the high engine speed range at the time of acceleration, the injection quantity upper limit can be enlarged by setting the exhaust valve opening timing to the advanced timing as compared to that in the mid engine speed range. As a result, it becomes possible to enlarge an increasing step of the fuel injection quantity so as to increase the engine torque enough. Therefore, acceleration capability in the high engine speed range is improved without being accompanied with deterioration of emissions.

As discussed above, according to the present embodiment, the engine torque can be raised enough without being accompanied with deterioration of emissions in every range of the low engine speed range, the mid engine speed range, and the high engine speed range when the diesel engine 10 accelerates. Consequently, acceleration capability is improved. Therefore optimization of the balance of acceleration capability, emissions, and fuel consumption is achieved.

It should be noted that although the injection quantity upper limit is set based on the exhaust valve opening timing and the engine speed in the above-mentioned second embodiment, the injection quantity upper limit may be set based on the exhaust valve opening timing, and turbo efficiency or charging efficiency.

In the second embodiment, which has been described above, the map shown in Fig. 5 corresponds to the "map" in the fourth or fifth aspect of the present invention. Further, the "exhaust valve opening timing control means" in the sixth or seventh aspect of the present invention is implemented when the ECU 50 controls the exhaust variable valve mechanism 58 so that the exhaust valve opening timing which has been described above is realized during acceleration of the diesel engine 10.

## Claims

1. A control apparatus for an internal combustion engine comprising:
a variable valve mechanism capable of varying at least opening timing of an exhaust valve;
injection quantity upper limit setting means for setting an upper limit of a fuel injection quantity based on the exhaust valve opening timing; and
limitation means for limiting the fuel injection quantity to the upper limit or less.

2. The control apparatus for an internal combustion engine according to claim 1, wherein the injection quantity upper limit setting means sets the upper limit so that:
the upper limit is maximized when the exhaust valve opening timing is a predetermined timing;
the upper limit gets smaller as the exhaust valve opening timing is advanced from the predetermined timing; and
the upper limit gets smaller as the exhaust valve opening timing is retarded from the predetermined timing.

3. The control apparatus for an internal combustion engine according to claim 1 or 2, wherein
the internal combustion engine is provided with a turbocharger driven by exhaust gas energy; and
the injection quantity upper limit setting means sets the upper limit based on the exhaust valve opening timing and the engine speed.

4. The control apparatus for an internal combustion engine according to claim 3, wherein
the injection quantity upper limit setting means includes a map which defines the upper limit on the basis of the exhaust valve opening timing and the engine speed; and
the map prescribes that the exhaust valve opening timing at which the upper limit is maximized is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range.

5. The control apparatus for an internal combustion engine according to claim 4, wherein the map prescribes that the exhaust valve opening timing at which the upper limit is maximized in the low engine speed range is more advanced than the exhaust valve opening timing at which the upper limit is maximized in the high engine speed range.

6. The control apparatus for an internal combustion engine according to any one of claims 3 to 5, further comprising:
exhaust valve opening timing control means for controlling the actuation of the variable valve mechanism so that the exhaust valve opening timing is set to a relatively advanced timing in a low engine speed range, moving in the retard direction as the engine speed rises from the low engine speed range toward a mid engine speed range, and moving in the advance direction as the engine speed rises further from the mid engine speed range toward a high engine speed range when the internal combustion engine accelerates.

7. The control apparatus for an internal combustion engine according to claim 6, wherein the exhaust valve opening timing control means ensures that the exhaust valve opening timing in the low engine speed range is more advanced than the exhaust valve opening timing in the high engine speed range.
